# EUROPÄISCHE PATENTSCHRIFT

(11) **EP 3 317 060 B1**
(45) Veröffentlichungstag und Bekanntmachung des Hinweises auf die Patenterteilung: **07.08.2019**
(21) Anmeldenummer: 16740939.0
(22) Anmeldetag: 24.06.2016
(51) Int. Cl.: B29B 7/40, B29B 7/60, B29B 7/74, B29B 7/82

(54) **MISCHVORRICHTUNG ZUM MISCHEN EINER FLÜSSIGEN KUNSTSTOFFKOMPONENTE MIT EINEM GAS**
MIXING DEVICE FOR MIXING A LIQUID POLYMERIC COMPONENT WITH A GAS
DISPOSITIF DE MÉLANGE POUR LE MÉLANGE D'UN COMPOSANT LIQUIDE D'UN MATÉRIAU SYNTHÉTIQUE AVEC UN GAZ

(30) Priorität: 03.07.2015 AT 4332015
(43) Veröffentlichungstag der Anmeldung: 09.05.2018
(73) Patentinhaber: Sonderhoff Engineering GmbH, 6850 Dornbirn (AT)
(72) Erfinder: METZLER, Mario, 6890 Lustenau (AT)
(74) Vertreter: Torggler & Hofinger Patentanwälte
(86) Internationale Anmeldenummer: PCT/AT2016/050227
(87) Internationale Veröffentlichungsnummer: WO 2017/004636

(56) Entgegenhaltungen:
- EP-A2- 0 090 257
- WO-A1-2012/084546
- DE-A1- 1 504 654
- DE-A1-102012 103 885
- DE-B- 1 158 480
- JP-A- S58 199 126
- JP-K1- S58 175 637
- US-A- 3 902 850

## Beschreibung

Die vorliegende Erfindung betrifft eine Mischvorrichtung zum Mischen einer flüssigen Kunststoffkomponente mit einem Gas mit den Merkmalen des Oberbegriffs des Anspruchs 1.

Eine Mischvorrichtung für Mehrkomponentenkunststoffe ist in der Druckschrift EP 0 090 257 A2 offenbart. Gattungsgemäße Mischvorrichtungen (siehe z.B. EP 0 776 745 B1) dienen zur Herstellung einer Mischung aus einer flüssigen Kunststoffkomponente und einem Gas, wobei die Mischung unter einem über Atmosphärendruck liegenden Druck steht. Das Gas wird durch die Rührvorrichtung zumindest zum Großteil in der flüssigen Kunststoffkomponente homogen verteilt. Wird diese Mischung aus der Ausbringöffnung ausgebracht, kommt es nach Durchlaufen von im Stand der Technik üblichen Komponenten (zumindest Dosierpumpe und Ventileinrichtung) zu einem Druckabfall, das Gas bringt die flüssige Kunststoffkomponente zum Schäumen und es entsteht nach Aushärtung der geschäumten Kunststoffkomponente ein mit Poren versehener Kunststoffteil zum Beispiel in Form einer Dichtungsraupe.
Ist die Mischvorrichtung über eine längere Zeit inaktiv, kommt es zu einem Austritt von bereits in der Flüssigkeit befindlichem Gas aus der Mischkammer durch jene Dichtung hindurch, welche die Mischkammer im Bereich der Welle abdichtet. Wird die Mischvorrichtung nach der Stillstandszeit aktiviert, ist die über die Ausbringöffnung auszubringende Mischung mit zu wenig Gas versehen und es kommt zu keinem ausreichenden Schäumprozess.

Aufgabe der Erfindung ist die Bereitstellung einer Mischvorrichtung, bei welcher die oben beschriebenen Probleme vermieden werden.

Diese Aufgabe wird durch eine Mischvorrichtung mit den Merkmalen des Anspruchs 1 gelöst. Vorteilhafte Ausführungsformen der Erfindung sind in den abhängigen Ansprüchen definiert.

Das aus der Mischkammer durch die Dichtung hindurch ausgetretene Gas gelangt auf die mischkammerabgewandte Seite der Dichtung in das dort angeordnete Reservoir und wird von der sich dort befindlichen flüssigen Kunststoffkomponente aufgenommen.

Wird die Mischvorrichtung wieder in Betrieb genommen, strömt die mit dem Gas versehene flüssige Kunststoffkomponente aus dem Reservoir über die Leitung, welche das Reservoir mit der Mischkammer verbindet, wieder in die Mischkammer und wird dort durch die Rührvorrichtung mit der zu wenig Gas aufweisenden flüssigen Kunststoffkomponente homogenisiert.

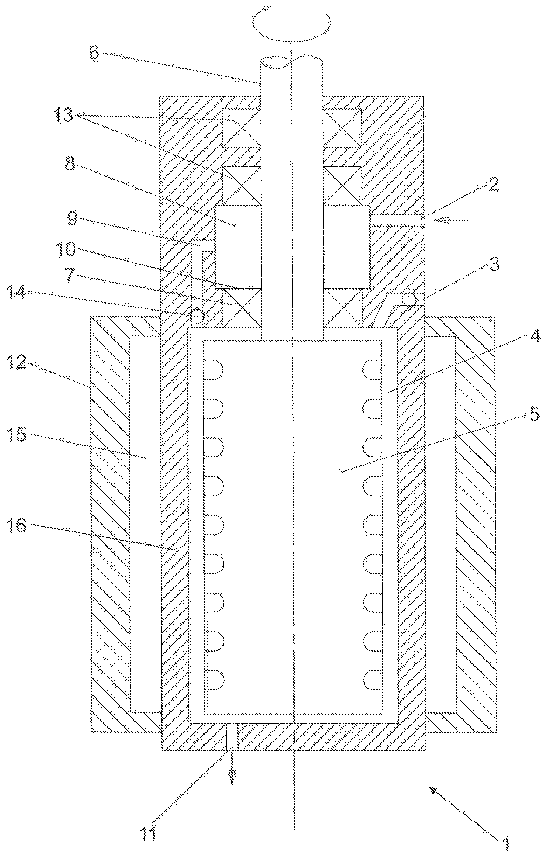

Eine Ausführungsform der Erfindung wird anhand der einzigen Figur 1 diskutiert.

Diese zeigt eine Mischvorrichtung 1 zum Mischen einer flüssigen Kunststoffkomponente mit einem Gas. Die Mischvorrichtung 1 weist wenigstens einen Flüssigkeitszulauf 2, wenigstens einen Gaszulauf 3 und eine Ausbringöffnung 11 für die in der Mischvorrichtung 1 erzeugte Mischung auf. Der Flüssigkeitszulauf 2, der Gaszulauf 3 und die Ausbringöffnung 11 sind jeweils mit einer Mischkammer 4 verbunden, in welcher eine drehbare Rührvorrichtung 5 angeordnet ist. Aus der Mischkammer 4 ragt eine Welle 6 zum Antrieb der Rührvorrichtung 5 heraus. Die Mischkammer 4 ist im Bereich der Welle 6 durch wenigstens eine Dichtung 7 abgedichtet, die im gezeigten Beispiel ringförmig ausgebildet ist. Der Gaszulauf 3 ist in diesem Beispiel mit einem Rückschlagventil ausgestattet.

Wenn aus der Mischkammer 4 insbesondere bei Stillstand Gas austritt, gelangt dieses auf die mischkammerabgewandte Seite 10 der wenigstens einen Dichtung 7. Dort ist ein mit dem wenigstens einen Flüssigkeitszulauf 2 verbundenes und mit der flüssigen Kunststoffkomponente gefülltes Reservoir 8 angeordnet, das von der Dichtung 7 bzw. deren mischkammerabgewandten Seite 10 begrenzt ist. Über eine Leitung 9 ist dieses Reservoir 8 mit der Mischkammer 4 verbunden.

Herrscht im Reservoir 8 und der Mischkammer 4 im Wesentlichen derselbe Druck, so verringert dies die Gasaustrittsrate des Gases aus der Mischkammer 4 in das Reservoir 8.

In der Fig. 1 erkennbar sind außerdem zwei ringförmige weitere Dichtungen 13, welche das Reservoir 8 gegenüber der Welle 6 abgrenzen bzw. abdichten.

In der Leitung 9 ist ein Rückschlagventil 14 angeordnet. Dadurch kann ein massiver Rückfluss im Falle einer Leckage im Bereich des Reservoirs 8 ausgeschlossen werden. Des Weiteren ist das Gehäuse 16 der Mischkammer 4 von einem Kühlmantel 12 umgeben. Der Kühlmantel 12 begrenzt einen Kühlraum 15, welcher von einem Fluid zum Kühlen der Mischkammer 4 durchströmbar ist.

### Bezugszeichenliste:

- 1: Mischvorrichtung
- 2: Flüssigkeitszulauf
- 3: Gaszulauf
- 4: Mischkammer
- 5: Rührvorrichtung
- 6: Welle
- 7: Dichtung
- 8: Reservoir
- 9: Leitung
- 10: mischkammerabgewandte Seite der Dichtung 7
- 11: Ausbringöffnung
- 12: Kühlmantel
- 13: weitere Dichtung
- 14: Rückschlagventil
- 15: Kühlraum
- 16: Gehäuse

## Patentansprüche

1. Mischvorrichtung (1) zum Mischen einer flüssigen Kunststoffkomponente mit einem Gas, mit wenigstens einem Flüssigkeitszulauf (2), wenigstens einem Gaszulauf (3) und einer Ausbringöffnung (11) für die in der Mischvorrichtung (1) erzeugte Mischung, die jeweils mit einer Mischkammer (4) verbunden sind, in welcher eine drehbare Rührvorrichtung (5) angeordnet ist, wobei aus der Mischkammer (4) eine Welle (6) zum Antrieb der Rührvorrichtung (5) herausragt und die Mischkammer (4) im Bereich der Welle (6) durch wenigstens eine Dichtung (7) abgedichtet ist, **dadurch gekennzeichnet, dass** auf der mischkammerabgewandten Seite (10) der wenigstens einen Dichtung (7) ein mit dem wenigstens einen Flüssigkeitszulauf (2) verbundenes Reservoir (8) angeordnet ist, welches über eine Leitung (9) mit der Mischkammer (4) verbunden ist, wobei die Dichtung (7) das Reservoir (8) begrenzt.

2. Mischvorrichtung nach Anspruch 1, **dadurch gekennzeichnet, dass** die Dichtung (7) ringförmig ausgebildet ist.

3. Mischvorrichtung nach wenigstens einem der vorhergehenden Ansprüche, **dadurch gekennzeichnet, dass** die Mischvorrichtung (1) wenigstens eine weitere - vorzugsweise ringförmige - Dichtung (13) umfasst, die das Reservoir (8) gegenüber der Welle (6) abdichtet.

4. Mischvorrichtung nach wenigstens einem der vorhergehenden Ansprüche, **dadurch gekennzeichnet, dass** in der Leitung (9) ein Rückschlagventil (14) angeordnet ist.

5. Mischvorrichtung nach wenigstens einem der vorhergehenden Ansprüche, **dadurch gekennzeichnet, dass** ein die Mischkammer (4) begrenzendes Gehäuse (16) von einem Kühlmantel (12) umgeben ist, wobei der Kühlmantel (12) einen Kühlraum (15) begrenzt, welcher von einem Fluid zum Kühlen der Mischkammer (4) durchströmbar ist.

## Claims

1. A mixing device (1) for mixing a liquid plastics component with a gas, comprising at least one liquid feed (2), at least one gas feed (3) and a discharge opening (11) for the mixture produced in the mixing device (1), which are respectively connected to a mixing chamber (4) in which a rotatable agitator device (5) is arranged, wherein a shaft (6) for driving the agitator device (5) projects out of the mixing chamber (4) and the mixing chamber (4) is sealed off in the region of the shaft (6) by at least one seal (7), **characterised in that** arranged on the side (10) of the at least one seal (7), that is remote from the mixing chamber, is a reservoir (8) which is connected to the at least one liquid feed (2) and which is connected to the mixing chamber (4) by way of a line (9), wherein the seal (7) delimits the reservoir (8).

2. A mixing device as set forth in claim 1 **characterised in that** the seal (7) is of an annular configuration.

3. A mixing device as set forth in at least one of the preceding claims **characterised in that** the mixing device (1) includes at least one further - preferably annular - seal (13) which seals off the reservoir (8) with respect to the shaft (6).

4. A mixing device as set forth in at least one of the preceding claims **characterised in that** a non-return valve (14) is arranged in the line (9).

5. A mixing device as set forth in at least one of the preceding claims **characterised in that** a housing (16) delimiting the mixing chamber (4) is surrounded by a cooling casing (12), wherein the cooling casing (12) delimits a cooling chamber (15) through which a fluid for cooling the mixing chamber (4) can flow.

## Revendications

1. Dispositif de mélange (1) pour mélanger un composant liquide en matière synthétique à un gaz, avec au moins une arrivée de liquide (2), au moins une arrivée de gaz (3) et une ouverture de décharge (11) pour le mélange produit dans le dispositif de mélange (1), qui sont reliées à chaque fois à une chambre de mélange (4), dans laquelle est disposé un dispositif agitateur rotatif (5), dans lequel un arbre (6) destiné à entraîner le dispositif agitateur (5) fait saillie de la chambre de mélange (4) et la chambre de mélange (4) est rendue étanche dans la zone de l'arbre (6) par au moins un joint (7), **caractérisé en ce que** sur le côté opposé à la chambre de mélange (10) du au moins un joint (7) est disposé un réservoir (8) relié à la au moins une arrivée de liquide (2), lequel est relié par une conduite (9) à la chambre de mélange (4), dans lequel le joint (7) délimite le réservoir (8).

2. Dispositif de mélange selon la revendication 1, **caractérisé en ce que** le joint (7) est conçu de forme annulaire.

3. Dispositif de mélange selon au moins l'une des revendications précédentes, **caractérisé en ce que** le dispositif de mélange (1) comporte au moins un autre joint (13) - de préférence de forme annulaire - qui rend étanche le réservoir (8) par rapport à l'arbre (6).

4. Dispositif de mélange selon au moins l'une des revendications précédentes, **caractérisé en ce qu'**un clapet de non-retour (14) est disposé dans la conduite (9).

5. Dispositif de mélange selon au moins l'une des revendications précédentes, **caractérisé en ce qu'**un carter (16) délimitant la chambre de mélange (4) est entouré d'une chemise réfrigérante (12), dans lequel la chemise réfrigérante (12) délimite une chambre réfrigérée (15), laquelle peut être parcourue par un fluide pour refroidir la chambre de mélange (4).
